# EUROPEAN PATENT SPECIFICATION

(11) **EP 3 186 185 B1**
(45) Date of publication and mention of the grant of the patent: **14.08.2019**
(21) Application number: 15781440.1
(22) Date of filing: 25.08.2015
(51) Int. Cl.: B66C 1/02, B66C 1/04, B65G 67/12

(54) **DEVICE AND METHOD FOR LOADING A SEA CONTAINER WITH AN ELONGATED HEAVY PRODUCT OR A ROW OF HEAVY PRODUCTS**
VORRICHTUNG UND VERFAHREN ZUM LADEN EINES SEEBEHÄLTERS MIT EINEM LÄNGLICHEN SCHWEREN PRODUKT ODER EINER REIHE SCHWERER PRODUKTE
DISPOSITIF ET PROCÉDÉ POUR CHARGER UN CONTENEUR MARITIME AVEC UN PRODUIT LOURD ALLONGÉ OU UNE RANGÉE DE PRODUITS LOURDS

(30) Priority: 26.08.2014 NL 2013365
(43) Date of publication of application: 05.07.2017
(73) Proprietor: C. Steinweg - Handelsveem B.V., 3088 GN Rotterdam (NL)
(72) Inventor: PATRIKAKIS, Eftychios, NL-3088 GN Rotterdam (NL)
(74) Representative: Algemeen Octrooi- en Merkenbureau B.V.
(86) International application number: PCT/NL2015/050591
(87) International publication number: WO 2016/032329

(56) References cited:
- NL-C- 137 474
- US-A- 3 433 459
- US-A1- 2004 191 038

## Description

The present invention relates to a device for loading a sea container with an elongated heavy product or a row of heavy products via an open front side of the sea container. Within the scope of the present invention, the loading of products having a weight of at least 1000 kg or of rows of products having a total weight of at least 1000 kg is concerned.

It is generally known to use sea containers in transporting bulk goods by water, but also by road or by rail. The use of standard dimensions for sea containers makes efficient transport possible. Use is made of container lifts, also referred to as "a straddle carriers", which can engage the sea containers at the corners thereof by means of twist locks and move them over the quay. Carriers are also interested in transporting heavy elongated products, such as aluminium slabs, steel plates or bags filled with bulk goods, in sea containers. The loading of sea containers with such products and the subsequent unloading of the sea containers at a destination constitutes a practical problem, however, which is why such products are hardly transported in sea containers in practice, if at all. In those cases where carriers nevertheless opt for this possibility, they are confronted with the problem that it must be possible to load the sea containers with the heavy cargo. In practice this generally leads to unsafe situations. The object of the invention is to provide a solution which makes it possible to load a sea container with an elongated heavy product or a row of heavy products in a quick and safe manner through an open front side of the sea container. In order to achieve that object, the invention provides a device comprising a vehicle which is movable in a direction of movement, which vehicle comprises a frame, at least part of which frame has an at least substantially upside down U-shaped cross-section, seen in the direction of movement, which is in part formed by at least two opposite upright leg members of the frame, the device further comprising an engaging unit provided with engaging elements for engaging the upper side of the product or the row of products, moving means for moving the engaging unit up and down between the two upright leg members relative to the frame, wherein the engaging unit comprises a subframe which is provided with an elongated lifting arm which extends at least substantially horizontally and which has a free end which is oriented in the direction of movement, on the underside of which lifting arm a number of engaging elements are provided over at least part of the length of the lifting arm in at least one row extending in the longitudinal direction of the lifting arm. The use of the horizontal lifting arm with engaging elements provided on the underside thereof makes it possible to engage heavy products, whether or not disposed in a row, by means of the engaging elements and subsequently inserting the arm with the product or the row of products suspended from the engaging elements thereof with the free end into an open front side of a sea container so as to thus load the sea container in a safe manner.

As an aside it is noted that US publication No. US 3,433,459 discloses a mobile hoist for manipulating jet engines. This hoist is not suitable for loading a sea container with an elongated heavy product or a row of heavy products via an open front side of the sea container.

According to the invention the engaging unit further comprises an elongated basic arm which extends at least substantially horizontally and above the lifting arm, which basic arm and lifting arm are interconnected.

The lifting arm and the basic arm are connected at such a longitudinal position of the lifting arm that the engaging elements are provided between the longitudinal position in question and the free end of the lifting arm, at least the length of the lifting arm over which the engaging elements are provided can be kept clear for being inserted into a container.

In general it is a constructional advantage if, seen in a horizontal direction perpendicular to the direction of movement, the basic arm and the lifting arm and the connecting part between the basic arm and the lifting arm at least substantially define a C-shape. The upper horizontal part of the C-shape is in that case defined by the basic arm, the lower horizontal part of the C-shape is defined by the lifting arm and the upright part of the C-shape is defined by the connecting part.

To compensate for the possibly slightly inclined position relative to each other of an elongated heavy product to be loaded or the row of heavy products to be loaded on the one hand and the sea container on the other hand, it may be advantageous if the lifting arm is pivotable relative to the frame about a horizontal pivot pin that extends perpendicular to the direction of movement, in which case it may be advantageous from a constructional point of view, if a basic arm according to a previously discussed possible embodiment of the invention is used, if the basic arm and the lifting arm are pivotally about the pivot pin interconnected, in which case it may furthermore be advantageous if the lifting arm extends beyond the pivot pin, seen from the free end of the lifting arm, and the engaging unit comprises an actuator that acts between the part of the lifting arm that extends beyond the pivot pin and the basic arm for pivoting the lifting arm about the pivot pin relative to the basic arm. The pivoting of the lifting arm about the pivot pin can be realised in a simple manner by suitably controlling the actuator.

A uniform engagement by the engaging elements, as a result of which the engaging elements will also be loaded uniformly, can be obtained in particular if the engaging elements are provided in a regular pattern.

With a view to achieving constructional simplicity it may furthermore be advantageous if the engaging elements are provided in a single row.

In order to avoid the risk of undesirable deformation in the device caused by the load exerted by a product or a row of products, it is preferable if the two upright leg members are provided with guide elements and the subframe is provided with guide members, which guide elements and guide members are configured for guiding cooperation during the up and down movement of the engaging unit. The up and down movement of the (loaded) lifting arm can thus take place in a very stable manner.

According to a very advantageous embodiment, the engaging elements comprise suction elements configured to engage the heavy product or the row of heavy products using a vacuum.

In order to be able to orient themselves to the heavy product or the row of heavy products to some extent, in particular upon engagement thereof, the suction elements are preferably suspended from flexible elongated hauling elements, which are in turn suspended from the lifting arm. The flexible hauling elements may advantageously be configured as link chains, for example.

A stable suspension of the suction elements can be obtained if each suction element is suspended from the hauling elements on opposite sides of the lifting arm.

The stability of the suspension can be enhanced in that at least some of the hauling elements via which a suction element is suspended extend at an angle relative to each other. The tendency to oscillate of the suction elements can thus be suppressed.

In order to contribute toward realising a uniform load on the suction elements it may be advantageous if the suction elements are connected to the lifting arm via spring elements. In practice it may occur that not all suction elements are loaded to the same extent, for example as a result of sagging of the product or of the lifting arm or simply because the product is not completely straight. The use of the spring means makes it possible to partially relieve the load on a suction cup that is loaded relatively heavily, so that the load on the various suction elements will remain uniform.

A constructionally advantageous embodiment is obtained if the hauling elements are suspended from bracket elements which are connected to the lifting arm via the spring elements. The bracket elements may extend laterally relative to the lifting arm, for example.

The invention is not limited to devices whose engaging elements are suction elements. Depending on the nature of the product to be loaded or the row of products to be loaded it may also be advantageous, for example, if the engaging elements comprise hook elements or clamping elements or if the engaging elements comprise magnets. In particular if magnets are used it is quite possible to use the above-discussed preferred embodiments that relate to the use of suction elements also with magnets.

The invention further relates to a method for loading a sea container with an elongated heavy product or a row of heavy products via an open front side of the sea container, using a device according to the invention, comprising the steps of:
A positioning the elongated heavy product or the row of heavy products and the engaging elements in such a manner relative to each other that at least some of the engaging elements are located directly above the heavy product or the row of heavy products;
C the engaging elements engaging the elongated heavy product or the row of heavy products;
D the device lifting the engaging elements, including the elongated heavy product engaged by the engaging elements or the row of heavy products are engaged by the engaging elements, in such a manner that the lifting arm, the engaging elements and the elongated heavy product engaged by the engaging elements or the row of heavy products engaged by the engaging elements extend within the height of the sea container;
E moving the vehicle in a first direction of movement in the longitudinal direction of the sea container with the free end of the lifting arm directed toward the opening in the sea container, in such a manner that the lifting arm, the engaging elements, as well as the elongated heavy product engaged by the engaging elements or the row of heavy products engaged by the engaging elements is moved through the opening into the sea container at least until the elongated heavy product engaged by the engaging elements or the row of heavy products engaged by the engaging elements is located entirely within the sea container;
F the device lowering the engaging elements, including the elongated heavy product engaged by the engaging elements or the row of heavy products engaged by the engaging elements, until the elongated heavy product engaged by the engaging elements or the row of heavy products engaged by the engaging element is supported on a supporting surface in the sea container;
G releasing the engagement by the engaging elements of the heavy product or the row of heavy products;
H moving the vehicle in a second direction of movement opposite the first direction of movement in the longitudinal direction of the sea container at least until the lifting arm extends completely outside the sea container.

An efficient embodiment of the method can be obtained if the method comprises the step to be carried out between steps A and C of
B the device lowering the engaging elements for the purpose of bringing the heavy product or the row of heavy products within reach of the engaging elements.

A similar type of advantage can be obtained if the engaging unit is moved down by the moving means within the framework of step B until the engaging means can engage the elongated heavy product or the row of heavy products and/or if the engaging unit is moved up, including the elongated heavy product engaged by the engaging elements or the row of heavy products engaged by the engaging elements, by the moving means within the framework of step D and/or if the engaging unit is moved down, including the elongated heavy product engaged by the engaging elements or the row of heavy products engaged by the engaging elements, by the moving means within the framework of step F.

During step A the vehicle is advantageously moved, such that the heavy product or the row of heavy products will be positioned between the two upright legs or at least the extension thereof. In this way a stable situation is obtained during the lifting of the heavy product or the row of heavy products.

It may also be very advantageous if the engaging elements engage the elongated heavy product or the row of heavy products at the upper side thereof during step C. In this way no space is occupied beside the heavy product or the row of heavy products by means needed for engaging the heavy product or the row of heavy products. It is important to realise within this context that the space in a sea container is limited and that some products must be manoeuvred with very little clearance in the sea container during the loading of the sea container.

The stability of the device during the actual loading of the sea container during step E is increased by moving the vehicle in such a manner during step E that the sea container will be positioned between the two upright legs.

A similar advantage is obtained if use is made of a device whose engaging unit comprises an elongated basic arm that extends at least substantially horizontally and above the lifting arm, wherein the basic arm and the lifting arm are interconnected, wherein the basic arm extends above the sea container during step F.

A very suitable use of the method according to the invention is obtained if the product is an aluminium slab, wherein furthermore preferably use is made of a device whose engaging elements are suction elements, wherein the slab is engaged by means of the suction elements during step C.

Another suitable use of the method according to the invention is obtained if the row of products is a row of bags, each having a volume of at least one cubic metre, which are filled with bulk goods, wherein furthermore preferably use is made of a device whose engaging elements comprise hook elements or clamping elements, wherein the bags are engaged by means of the hook elements or the clamping elements during step C.

Another suitable use of the method according to the invention is obtained if the product is a steel plate, wherein furthermore preferably use is made of a device whose engaging elements comprise magnets, wherein the steel plate is engaged by means of the magnets during step C.

In general it can be stated that the invention can be suitably used in particular if the product or the row of products has a weight of at least 1000 kg, preferably at least 5000 kg.

The invention also relates to a method for unloading a sea container loaded with an elongated heavy product or a row of heavy products via an open front side, using a device according to the invention, comprising the steps of:
K moving the vehicle in a first direction of movement in the longitudinal direction of the sea container with the free end of the lifting arm directed at the opening in the sea container, such that the lifting arm and the engaging elements are moved into the sea container through the opening in the sea container, at least until the engaging elements are positioned directly above the heavy product or the row of heavy products;
L the engaging elements engaging the heavy product of the row of heavy products;
M the device lifting the heavy product engaged by the engaging elements or the row of heavy products engaged by the engaging elements in the sea container;
N moving the vehicle in a second direction of movement opposite the first direction of movement in the longitudinal direction of the sea container at least until the lifting arm extends entirely outside the sea container;
O releasing the engagement of the heavy product or the row of heavy products by the engaging elements.

The invention will now be explained in more detail by means of a description of a possible embodiment thereof, not to be construed as being limitative, in which reference is made to the following figures:
Figure 1 is an isometric view of a device according to the invention;
Figure 2 is a front view of the device of figure 1;
Figure 3 is a side view of the device of figure 1;
Figure 4 is a bottom view of the lifting arm of the device of figure 1;
Figures 5a - 5f and figure 6 are isometric views showing seven successive stages of a use of the device of figure 1 during the loading of a container with an elongated heavy product;
Figure 7 is a vertical cross-sectional view of figure 6;
Figure 8 is an isometric view showing the free end of the lifting arm of the device according to the invention;
Figure 9 is a front view of the device according to the invention with a heavy product engaged thereby;
Figures 10a and 10b are side views showing two conditions of the lifting arm, including four associated suction cups;
Figure 11 is a vertical longitudinal sectional view showing a situation comparable to the situation shown in figure 5f, but in this case with a pivoted lifting arm.

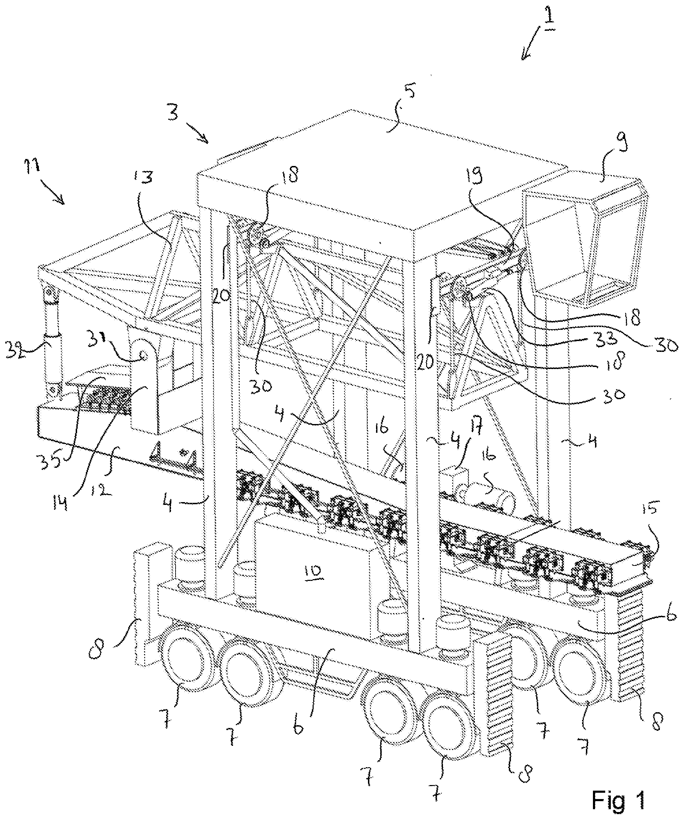

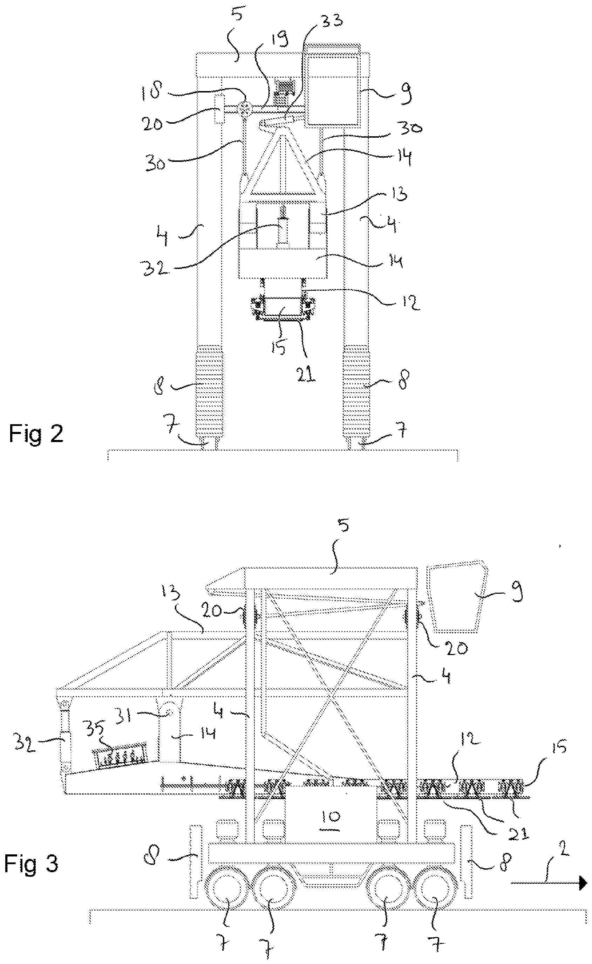

Figures 1, 2 and 3 are various views showing the device 1 according to the invention. The device 1 can be regarded as a vehicle that can be moved in a direction of movement 2 (figure 3) or in a direction opposite thereto. The vehicle 1 can be considered to be derived from a type of vehicle known as "straddle carrier". These vehicles are known per se, they are used for moving sea containers, for example on quays of dock areas.

The vehicle 1 has a frame 3 with four upright legs 4, which are interconnected at their upper ends via a roof construction 5. In the front view of figure 2, the legs 4 and the roof construction 5 define an upside-down U-shape. The legs 4 are supported on two girders 6 extending parallel to the direction of movement 2. At the bottom side of each girder 6, four wheels 7 are provided, at least some of which are drivable and at least some of which are steerable. The direction of movement 2 is that forward direction in which the vehicle 1 moves when the (steerable) wheels are in the neutral position. Bumper bodies 8 are provided at the ends of the girders 6. At the front side of the frame 3, the vehicle 1 comprises a cabin 9 connected to the frame 3, from which the vehicle 1 can be steered and controlled. The steering and control of the vehicle 1 may also take place by remote control, for example from the ground, or semi-automatically or even fully automatically. On one of the girders 6 a diesel generator 10 is provided for driving the vehicle 1, including various components thereof.

The vehicle 1 further comprises an engaging unit 11, which is provided between the legs of the aforesaid U-shape of the frame 3. The engaging unit 11 comprises a subframe with a lifting arm, a basic arm and a connecting part 14 between the lifting arm 12 and the basic arm 13. The lifting arm 12 is an elongated composite beam having a free end 15 oriented in the direction of movement 2. The basic arm 13 is a framework construction, which is suspended from a lifting device. The basic arm 13 is shown incompletely in the figures, in the sense that it also extends at the front side of the frame 3, inter alia under the cabin 9, and that a counterweight is provided on the part that is not shown.

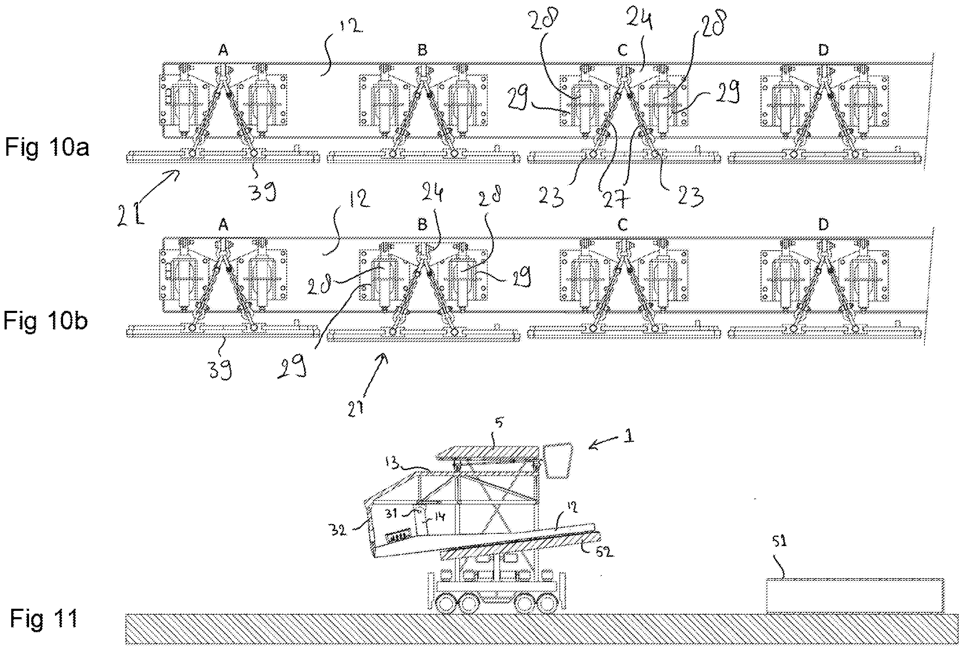

The aforesaid connecting part 14 of the engaging unit 11 comprises a horizontal pivot pin 31 between the lifting arm 12 and the basic arm 13, which pivot pin extends perpendicular to the direction of movement 2. At the end of the lifting arm 12 opposite the free end 15, a hydraulic cylinder 32 that acts between the lifting arm 12 and the basic arm 13 is provided. The lifting arm 12 can be pivoted up or down about the pivot pin 31 by suitable actuation of the hydraulic cylinder 32, thus reaching the situation shown in figure 11, in which the lifting arm 12 includes an acute angle with a horizontal line. The aforesaid pivoting of the lifting arm 12 relative to the basic arm 13 can be useful, for example, for compensating deflection of the lifting arm 32.

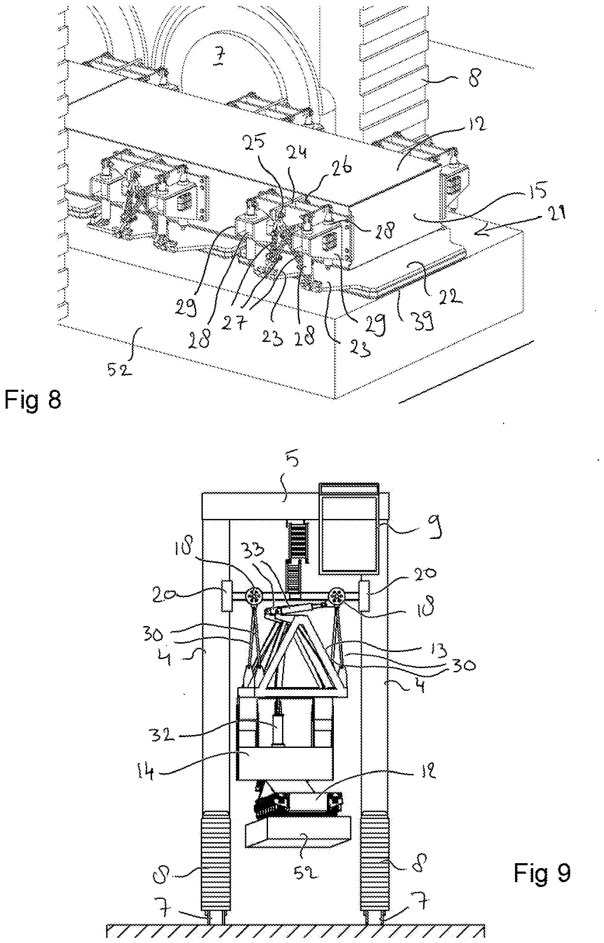

The aforesaid lifting device for the engaging unit 11 comprises two cable drums 16 on a vertical drive unit 17 for the cable drums. From the cable drums 16, cables (not shown) extend straight up to the roof construction 5, where they are led to various positions, which together define a rectangle, directly above the basic arm 13. From said positions the cables extend straight down, pass through 180 degrees over pulleys 18, and subsequently engage the roof construction 5 again. The pulleys 18 are rotatably connected to two cross beams 19, which each extend between two legs 4. The cross beams 19 are provided with two guide members 20 at their ends, which guide members are capable of guiding cooperation with guide elements (not shown) on the legs 4. The basic arm 13 is suspended from the two cross beams 19 via four chains 30, alternatively also to be configured as tie rods. Each of the tie rods 30 pivotally connects to one of the two cross beams 19 at the upper end and to the basic arm 13 at the lower end. From the above description it will be understood that actuation of the cable drums 16 will cause the engaging unit 11 to move up or down. The lifting device further comprises two cylinders 33, which each act transversely to the direction of movement 2 between one of the cross beams 19 and the basic arm 13. Suitable actuation of the two cable drums 16, the two cylinders 33 and the cylinder 32 makes it possible to orient the basic arm 13, and thus the engaging unit 11 as a whole, obliquely in various directions relative to the frame 3, as shown in figure 9, for example.

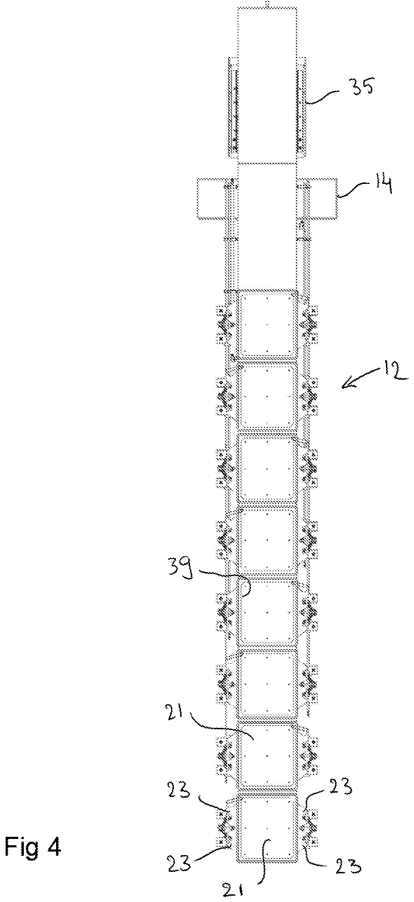

The engaging unit 11 further comprises eight suction cups 21, which are provided in a single row under the lifting arm 12. The suction cups 21 are spaced closely together. The row starts at the free end 15 and extends from there in a direction opposite to the direction of movement. The total length of the row is about 10.5 m, which corresponds to the maximum length of the heavy product or of the row of heavy products that can be loaded into a sea container by means of the device. In this specific example, the length of the individual suction cups, which are rectangular in shape, is about 1.25 m, whilst the width is about 1.10 m. The suction cups are spaced about 30 mm apart (figure 4). Within the scope of the invention it is also possible, of course, to use suction cups having a different shape and/or different dimensions and/or to use two parallel rows of suction cups, for example.

As is clearly visible in figure 8, each of the suction cups 21 is suspended from the lifting arm 12, so that the connection between the suction cup 21 on the one hand and the lifting arm 12 on the other hand can be characterised as slightly flexible. The suction cups 21 each have a steel plate 21 at the upper side of the suction cup 21. On the underside of each steel plate, a flexible edge 39 of rubber or at least of a rubbery material is provided, which defines the aforesaid dimensions of the suction cups 21. The steel plate 22 is wider than the lifting arm 12 and configured with two projecting parts 23 on either side of the lifting arm 12. The suction cups 21 are suspended from brackets 24 via chains 27. Each of the brackets 24 is to that end provided with two points of attachment 25, 26. The chains 27 extend from the ends of each of the projecting parts 23 to each of the points of engagement 25, 26. Thus, four chains are provided on either side of the lifting arm 12 for each of the suction cups 21. In total, each suction cup 21 is suspended from eight chains 27, therefore. This manner of suspension of the suction cups achieves that only limited horizontal movement of the suction cups 21 relative to the lifting arm 12 is possible.

Each of the brackets 24 is supported on the upper ends of four piston parts of four spring elements 28. The cylinder parts of the spring elements 28 are fixedly connected to mounting arms 29, which extend laterally from the lifting arm 12 and are rigidly connected thereto. Two spring elements are provided on each mounting arm 29. Thus, four mounting arms 29 and eight spring elements 28 are provided for each suction cup 21. The operation of the above-described suspension of the suction cups 21 will be described later in this text with reference to figures 10a and 10b.

A valve block 35 is provided on the lifting arm 12 between the connecting part 14 and the hydraulic cylinder 32. From the valve block 35, vacuum lines extend to the suction cups 21, more specifically to connecting points provided in the upper side of the steel plates 22 of the suction cups 21, either via the interior of the lifting arm 12 or along the outer side of the lifting arm 12. Via the valve block 35, the suction cups 21 are connected to a vacuum source (not shown). The vacuum system including the valve block 35 is configured so that the failure of a single component of the vacuum system cannot lead to the vacuum being lost at all suction cups 21.

Hereinafter the manner in which the device 1 as described in the foregoing can be used for loading a sea container 51, more specifically in this example a sea container having a length of 40 feet, with a relatively heavy elongated product 52 in accordance with the method according to the invention. The sea container 51 is open at the front side facing the vehicle 1 and is provided with an opening 50 on that side. The product 52 is a so-called slab of aluminium, for example. These products 52 have a weight of between about 7500 kg and 30,000 kg, for example, a length of between 4.2 m and 11 m, a width of between 1.15 m and 2.20 m and a thickness usually of about 60 cm.

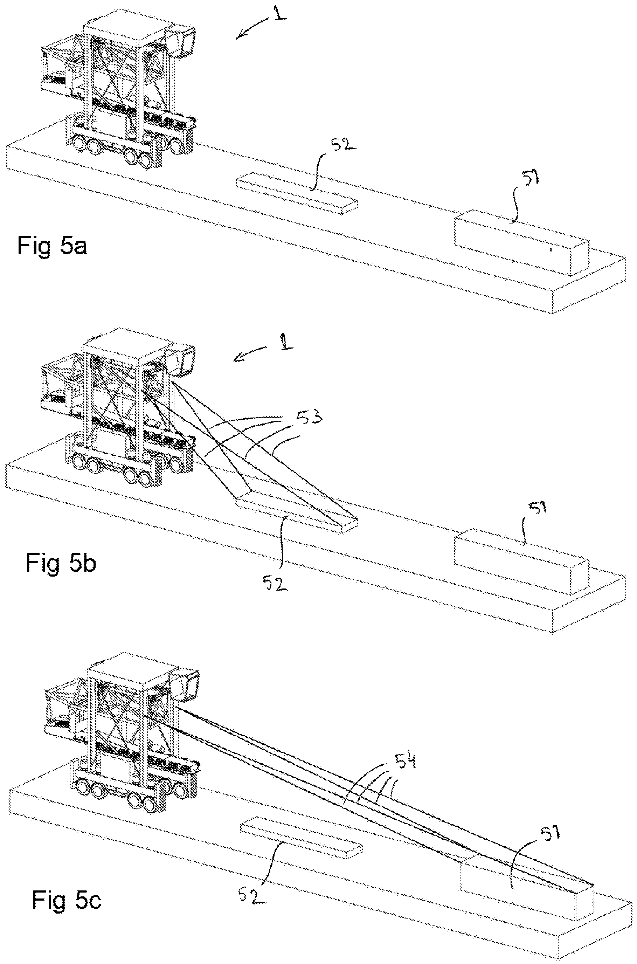

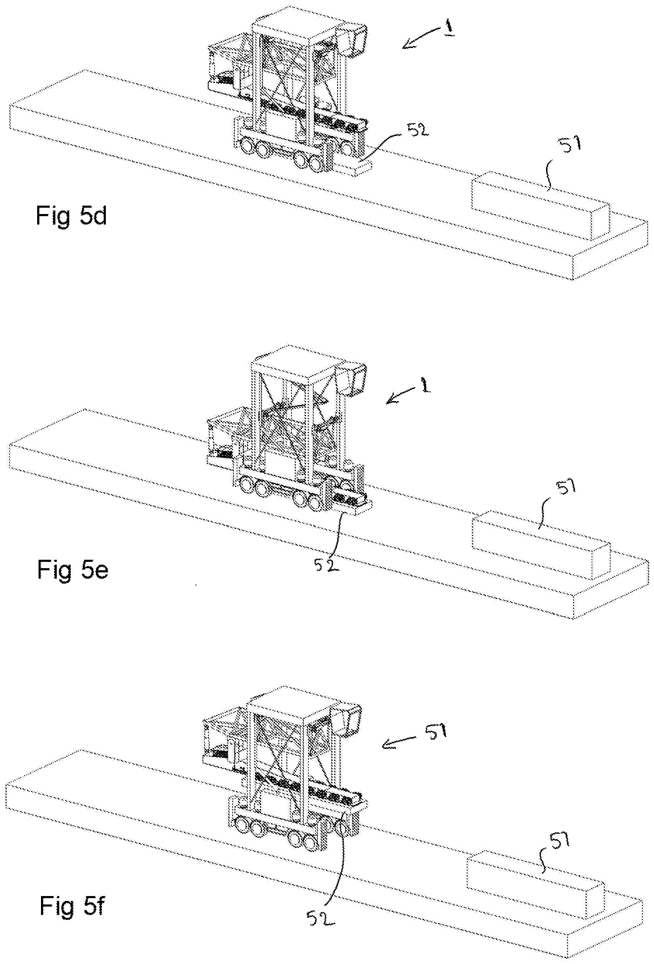

During a preliminary stage the slab 52 has been positioned at least substantially in line with the sea container 51. The vehicle 1 is moved in such a manner that is also positioned in line with the slab 52 and the sea container 51 on the side of the slab 52 remote from the sea container 51, with the direction of movement toward the sea container 51 (figure 5a). Subsequently the relative positions of the slab 52 and the sea container 51 relative to the vehicle 1 is determined by means of laser beams 53 and 54, respectively (figure 5b, figure 5c). The sources for the laser beams are not shown in the figures.

Then the vehicle 1 is moved such that the suction cups 21 are positioned directly above the slab 52 (figure 5d). In addition to the information that has been obtained by means of the laser beams 52, 54, use can also be made during this operation of cameras present in the cabin 9. The slab 52 is positioned between the legs 4 (or at least the extensions thereof) of the vehicle 1.

During a next stage, the engaging unit 11 is lowered by means of the lifting device until the suction cups 21, more specifically the flexible circumferential edges 39 thereof, are supported on the slab 52. As a result, the chains 27 are slack (5e). Then the vacuum system is activated, as a result of which the suction cups 21 engage the upper side of the slab 52 by suction. In this example the lifting capacity for each suction cup 21 is at least about 5000 kg. The lifting device subsequently lifts the engaging unit 11 again, with the slab 52 moving clear of the ground on which it was supported. During said lifting the chains 21 are tensioned again (figure 5f).

In case it has appeared from the measurements taken by means of the laser beams 53, 54 that the longitudinal direction of the slab 52 includes an (acute) angle with the longitudinal direction of the sea container 51, the vehicle 1 can be moved in such a manner (by some steering) from the situation shown in figure 5c that the direction of movement 2 extends parallel to the longitudinal direction of the slab 52. Alternatively it is also possible to move the vehicle 1 to a position above the slab 52 such that the direction of movement 2 extends parallel to (and if possible in line with) the sea container 51. Subsequently the engaging unit 11 can be positioned obliquely relative to the frame 3 but straight above the slab 52 by suitable actuation of the cylinders 33, so that the lifting arm 12 extends parallel to the slab 52. Having engaged and lifted the slab 52, the engaging unit 11 can be moved to the neutral position again by suitable actuation of the cylinders, in which neutral position the lifting arm 12 extends parallel to the direction of movement 2.

During said lifting there is a risk that not all the suction cups 21 are loaded to the same extent. This in turn involves the risk that the load on a particular suction cup 21 will run up higher than the capacity of the suction cup 21 in question. This risk may for example result from (the upper side of) the slab 52 not being level, deflection of the slab 52 or deflection of the lifting arm 12. This risk is reduced by the manner of suspension of the suction cup 21, using the spring elements 28, as described in the foregoing. Reference is made to figures 10a and 10b. Figure 10a shows the ideal situation, in which all the suction cups 21 located at positions A - D, are loaded uniformly by the load of a heavy product (not shown). The load is so low that no (substantial) compression of the spring elements 28 takes place. In the example shown in figure 10b, however, the suction cup 20, located at position B, is loaded more heavily. As a result, the spring elements 28 associated with the suction cup 21 in question will compress, as a result of which the load on that specific suction cup 21 will decrease. The characteristics of the spring elements 28 are designed to keep the load as much as possible the same for all the suction cups 21. In this example the maximum compression of the spring elements is 30 mm.

The vehicle 1 then moves toward the sea container 51. When the free end 15 of the lifting arm 12 is positioned close to the opening 50, the lifting device of the vehicle 1 will position the engaging unit 11 at such a height that the upper side of the lifting arm 12 is located lower than the level of the inner side of the roof of the sea container 51 and the bottom side of the slab 52 is located above the level of the upper side of the bottom of the sea container 51. The vehicle 1 is positioned so that both the direction of movement 2 of the vehicle 1 and the longitudinal directions of the lifting arm 12 (and thus of the slab 52) extend parallel to the longitudinal direction of the sea container 51. In addition, the widths of the lifting arm 12, the slab 52 and the suction cups 21 extend within the width of the opening in the sea container 51. If the vehicle 1 is not properly aligned relative to the sea container 51, which can be determined by means of laser sensors or cameras, for example, and which manifests itself in that case in that the free end 15 of the lifting arm 12 is not positioned directly in front of the open sea container 51, it is possible to move the engagement unit 11 laterally relative to the frame 3 by (simultaneous) actuation of the cylinders 33.

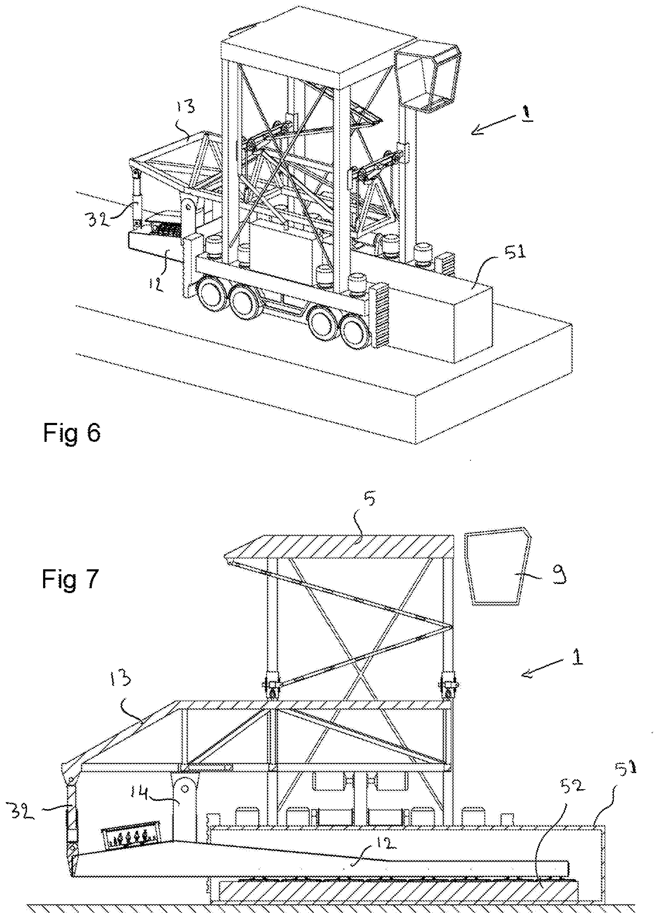

The vehicle 1 is then moved in the direction of movement 2, with the lifting arm 12, the suction cups 21 as well as the slab 52 engaged by the suction cups 21 being moved into the sea container 51 through the opening 50 in the sea container 51, at least until the slab 52 is located entirely within the sea container. The sea container 51 is located between the legs 4. Subsequently, the lifting device will lower the engaging unit 11 until the slab 52 is supported on the bottom of the sea container 51, with the chains 72 becoming slightly slack again and the spring elements 28 taking up their unloaded position again. In this way the situation shown in figures 6 7 is reached. During a final stage, the vacuum system is deactivated, the engaging unit 11 is lifted to a limited extent and the vehicle 1 is moved in a direction opposite the direction of movement 2 until the lifting arm 12 has been moved out of the sea container in its entirety.

In an analogous manner it is also possible to stack elongated heavy products in the sea container 51 if the thickness/height as well as the weight (in connection with the maximum allowable loading weight of the sea container 51) allow this. Based on the above description, the skilled person will realise how a sea container can be unloaded again using the vehicle 1 by carrying out the various steps substantially in reverse order.

In the foregoing the invention has been explained by way of illustration on the basis of aluminium slabs, but it is also conceivable to load different kinds of heavy elongated products by means of a device according to the invention. Think in this connection of steel slabs, for example, or elongated plates that are engaged by means of suction cups as described in the foregoing or by means of magnets (instead of suction cups). Furthermore, big bags filled with bulk goods may be considered in this regard, which big bags are disposed in a row and which can each be engaged by means of a hook or clamp provided on the underside of a lifting arm.

## Claims

1. A device for loading a sea container (51)with an elongated heavy product (52) or a row of heavy products via an open front side of the sea container, comprising a vehicle (1) which is movable in a direction of movement (2), which vehicle comprises a frame (3), at least part of which frame has an at least substantially upside down U-shaped cross-section, seen in the direction of movement, which is in part formed by at least two opposite upright leg members (4) of the frame, the device further comprising an engaging unit (11) provided with engaging elements (21) for engaging the upper side of the product or the row of products, moving means (16, 17, 18) for moving the engaging unit up and down between the two upright leg members relative to the frame, wherein the engaging unit comprises a subframe which is provided with an elongated lifting arm (12) which extends at least substantially horizontally and which has a free end (15) which is oriented in the direction of movement, on the underside of which lifting arm a number of engaging elements are provided over at least part of the length of the lifting arm in at least one row extending in the longitudinal direction of the lifting arm wherein the engaging unit further comprises an elongated basic arm (13) that extends at least substantially horizontally and above the lifting arm, **characterised in that** the basic arm and the lifting arm are interconnected at such a longitudinal position of the lifting arm that the engaging elements are provided between the longitudinal position in question and the free end of the lifting arm.

2. A device according to claim 1, **characterised in that**, seen in a horizontal direction perpendicular to the direction of movement, the basic arm (13) and the lifting arm (12) and a connecting part (14) between the basic arm and the lifting arm at least substantially define a C-shape.

3. A device according to claim 1 or 2, **characterised in that** the lifting arm (12) is pivotable relative to the frame (3) about a horizontal pivot pin (31) that extends perpendicular to the direction of movement (2).

4. A device according to claim 3, **characterised in that** the basic arm (13) and the lifting arm (12) are pivotally about the pivot pin (31) interconnected.

5. A device according to claim 4, **characterised in that** the lifting arm (12) extends beyond the pivot pin (31), seen from the free end (15) of the lifting arm, and the engaging unit (11) comprises an actuator (32) that acts between the part of the lifting arm that extends beyond the pivot pin and the basic arm for pivoting the lifting arm about the pivot pin relative to the basic arm.

6. A device according to any one of the preceding claims, **characterised in that** the engaging elements (21) are provided in a regular pattern and/or in a single row.

7. A device according to any one of the preceding claims, **characterised in that** the two upright leg members (4) are provided with guide elements and the subframe is provided with guide members (20), which guide elements and guide members are configured for guiding cooperation during the up and down movement of the engaging unit (11).

8. A device according to any one of the preceding claims, **characterised in that** the engaging elements (21) are suction elements (21) configured to engage the heavy product (52) or the row of heavy products using a vacuum.

9. A device according to claim 8, **characterised in that** the suction elements (21) are suspended from flexible elongated hauling elements, which are in turn suspended from the lifting arm.

10. A device according to claim 9, **characterised in that** each suction element is suspended from the hauling elements on opposite sides of the lifting arm.

11. A device according to claim 9 or 10, **characterised in that** at least some of the hauling elements via which a suction element is suspended extend at an angle relative to each other.

12. A device according to any one of claims 1 - 7, **characterised in that** the engaging elements comprise hook elements or clamping elements or magnets.

13. A method for loading a sea container (51) with an elongated heavy product (52) or a row of heavy products via an open front side of the sea container, using a device according to any one of the preceding claims, comprising the steps of:
A positioning the elongated heavy product (52) or the row of heavy products and the engaging elements (21) in such a manner relative to each other that at least some of the engaging elements are located directly above the heavy product or the row of heavy products;
C the engaging elements engaging the elongated heavy product or the row of heavy products;
D the device lifting the engaging elements, including the elongated heavy product engaged by the engaging elements or the row of heavy products are engaged by the engaging elements, in such a manner that the lifting arm (12), the engaging elements and the elongated heavy product engaged by the engaging elements or the row of heavy products engaged by the engaging elements extend within the height of the sea container;
E moving the vehicle (1) in a first direction of movement in the longitudinal direction of the sea container with the free end (15) of the lifting arm directed toward the opening in the sea container, in such a manner that the lifting arm, the engaging elements, as well as the elongated heavy product engaged by the engaging elements or the row of heavy products engaged by the engaging elements is moved through the opening into the sea container at least until the elongated heavy product engaged by the engaging elements or the row of heavy products engaged by the engaging elements is located entirely within the sea container;
F the device lowering the engaging elements, including the elongated heavy product engaged by the engaging elements or the row of heavy products engaged by the engaging elements, until the elongated heavy product engaged by the engaging elements or the row of heavy products engaged by the engaging element is supported on a supporting surface in the sea container;
G releasing the engagement by the engaging elements of the heavy product or the row of heavy products;
H moving the vehicle in a second direction of movement opposite the first direction of movement in the longitudinal direction of the sea container at least until the lifting arm extends completely outside the sea container.

14. A method according to claim 13, **characterised by** carrying out, between steps A and C, the step of
B the device lowering the engaging elements for the purpose of bringing the heavy product or the row of heavy products within reach of the engaging elements.

15. A method for unloading a sea container (51) loaded with an elongated heavy product (52) or a row of heavy products via an open front side, using a device according to any one of claims 1 - 12, comprising the steps of:
K moving the vehicle (1) in a first direction of movement in the longitudinal direction of the sea container with the free end (15) of the lifting arm (12) directed at the opening in the sea container, such that the lifting arm and the engaging elements (21) are moved into the sea container through the opening in the sea container, at least until the engaging elements are positioned directly above the heavy product or the row of heavy products;
L the engaging elements engaging the heavy product of the row of heavy products;
M the device lifting the heavy product engaged by the engaging elements or the row of heavy products engaged by the engaging elements in the sea container;
N moving the vehicle in a second direction of movement opposite the first direction of movement in the longitudinal direction of the sea container at least until the lifting arm extends entirely outside the sea container;
O releasing the engagement of the heavy product or the row of heavy products by the engaging elements.

## Patentansprüche

1. Vorrichtung zum Laden eines Seebehälters (51) mit einem länglichen schweren Produkt (52) oder einer Reihe schwerer Produkte über eine offene Vorderseite des Seebehälters, ein Fahrzeug (1) umfassend, das in einer Bewegungsrichtung (2) beweglich ist, wobei das Fahrzeug einen Rahmen (3) umfasst, wobei mindestens ein Teil des Rahmens, in der Bewegungsrichtung gesehen, einen Querschnitt in mindestens im Wesentlichen umgekehrter U-Form aufweist, der teilweise durch mindestens zwei gegenüberliegende aufrechte Beinelemente (4) des Rahmens gebildet wird, wobei die Vorrichtung ferner eine Ankoppeleinheit (11), die mit Ankoppelelementen (21) zum Ankoppeln der Oberseite des Produkts oder der Reihe von Produkten versehen ist sowie Bewegungsmittel (16, 17, 18) zum Aufwärts- und Abwärtsbewegen der Ankoppeleinheit relativ zu dem Rahmen zwischen den zwei aufrechten Beinelementen umfasst, wobei die Ankoppeleinheit einen Teilrahmen umfasst, der mit einem länglichen Hubarm (12) versehen ist, der sich mindestens im Wesentlichen horizontal erstreckt und der ein freies Ende (15) aufweist, das in der Bewegungsrichtung orientiert ist, wobei an der Unterseite des Hubarms über mindestens einen Teil der Länge des Hubarms mehrere Ankoppelelemente in mindestens einer Reihe, die sich in der Längsrichtung des Hubarms erstreckt, vorgesehen sind, wobei die Ankoppeleinheit ferner einen länglichen Basisarm (13) umfasst, der sich mindestens im Wesentlichen horizontal und über den Hubarm erstreckt, **dadurch gekennzeichnet, dass** der Basisarm und der Hubarm an solch einer Längsposition des Hubarms miteinander verbunden sind, dass die Ankoppelelemente zwischen der betreffenden Längsposition und dem freien Ende des Hubarms bereitgestellt werden.

2. Vorrichtung nach Anspruch 1, **dadurch gekennzeichnet, dass** der Basisarm (13) und der Hubarm (12) sowie ein Verbindungsteil (14) zwischen dem Basisarm und dem Hubarm, in einer Horizontalrichtung im rechten Winkel zu der Bewegungsrichtung gesehen, mindestens im Wesentlichen eine C-Form definieren.

3. Vorrichtung nach Anspruch 1 oder 2, **dadurch gekennzeichnet, dass** der Hubarm (12) über einen horizontalen Schwenkbolzen (31), der sich im rechten Winkel zu der Bewegungsrichtung (2) erstreckt, relativ zu dem Rahmen (3) schwenkbar ist.

4. Vorrichtung nach Anspruch 3, **dadurch gekennzeichnet, dass** der Basisarm (13) und der Hubarm (12) über den Schwenkbolzen (31) schwenkbar miteinander verbunden sind.

5. Vorrichtung nach Anspruch 4, **dadurch gekennzeichnet, dass** sich der Hubarm (12), von dem freien Ende (15) des Hubarms gesehen, bis hinter den Schwenkbolzen (31) erstreckt, und dass die Ankoppeleinheit (11) ein Stellglied (32) umfasst, das zwischen dem Teil des Hubarms, der sich bis hinter den Schwenkbolzen erstreckt, und dem Basisarm zum Schwenken des Hubarms über den Schwenkbolzen relativ zu dem Basisarm wirkt.

6. Vorrichtung nach einem der vorangegangenen Ansprüche, **dadurch gekennzeichnet, dass** die Ankoppelelemente (21) in einem regelmäßigen Muster und/oder in einer einzelnen Reihe vorgesehen sind.

7. Vorrichtung nach einem der vorangegangenen Ansprüche, **dadurch gekennzeichnet, dass** die zwei aufrechten Beinelemente (4) mit Führungselementen versehen sind und der Teilrahmen mit Führungsteilen (20) versehen ist, wobei die Führungselemente und Führungsteile für ein zusammenwirkendes Führen während der Aufwärts- und Abwärtsbewegung der Ankoppeleinheit (11) ausgelegt sind.

8. Vorrichtung nach einem der vorangegangenen Ansprüche, **dadurch gekennzeichnet, dass** die Ankoppelelemente (21) Saugelemente (21) sind, die zum Ankoppeln des schweren Produkts (52) oder der Reihe schwerer Produkte unter Nutzung eines Vakuums ausgelegt sind.

9. Vorrichtung nach Anspruch 8, **dadurch gekennzeichnet, dass** die Saugelemente (21) an flexiblen länglichen Transportelementen aufgehängt sind, die wiederum an dem Hubarm aufgehängt sind.

10. Vorrichtung nach Anspruch 9, **dadurch gekennzeichnet, dass** jedes Saugelement an gegenüberliegenden Seiten des Hubarms an den Transportelementen aufgehängt ist.

11. Vorrichtung nach Anspruch 9 oder 10, **dadurch gekennzeichnet, dass** sich mindestens einige der Transportelemente, über die ein Saugelement aufgehängt ist, in einem Winkel relativ zueinander erstrecken.

12. Vorrichtung nach einem der Ansprüche 1 bis 7, **dadurch gekennzeichnet, dass** die Ankoppelelemente Hakenelemente oder Klemmelemente oder Magnete umfassen.

13. Verfahren zum Laden eines Seebehälters (51) mit einem länglichen schweren Produkt (52) oder einer Reihe schwerer Produkte über eine offene Vorderseite des Seebehälters, unter Verwendung einer Vorrichtung nach einem der vorangegangenen Ansprüche, die folgenden Schritte umfassend:
A Positionieren des länglichen schweren Produkts (52) oder der Reihe schwerer Produkte und der Ankoppelelemente auf solche Weise relativ zueinander, dass sich mindestens einige der Ankoppelelemente direkt über dem schweren Produkt oder der Reihe schwerer Produkte befinden;
C Ankoppeln des schweren Produkts oder der Reihe schwerer Produkte an die Ankoppelelemente durch die Ankoppelelemente;
D Anheben der Ankoppelelemente, einschließlich des länglichen schweren Produkts, das durch die Ankoppelelemente angekoppelt ist, oder der Reihe schwerer Produkte, die durch die Ankoppelelemente angekoppelt ist, durch die Vorrichtung auf solche Weise, dass sich der Hubarm (12), die Ankoppelelemente und das längliche schwere Produkt, das durch die Ankoppelelemente angekoppelt ist oder die Reihe schwerer Produkte, die durch die Ankoppelelemente angekoppelt ist, innerhalb der Höhe des Seebehälters erstrecken;
E Bewegen des Fahrzeugs (1) in einer ersten Bewegungsrichtung in der Längsrichtung des Seebehälters mit dem freien Ende (15) des Hubarms zu der Öffnung in dem Seebehälter hin gerichtet auf solche Weise, dass der Hubarm, die Ankoppelelemente und das längliche schwere Produkt, das durch die Ankoppelelemente angekoppelt ist, oder die Reihe schwerer Produkte, die durch die Ankoppelelemente angekoppelt ist, durch die Öffnung in den Seebehälter bewegt werden, mindestens bis sich das längliche schwere Produkt, das durch die Ankoppelelemente angekoppelt ist, oder die Reihe schwerer Produkte, die durch die Ankoppelelemente angekoppelt ist, vollständig im Innern des Seebehälters befindet;
F Herunterlassen der Ankoppelelemente, einschließlich des länglichen schweren Produkts, das durch die Ankoppelelemente angekoppelt ist, oder der Reihe schwerer Produkte, die durch die Ankoppelelemente angekoppelt ist, durch die Vorrichtung, bis das längliche schwere Produkt, das durch die Ankoppelelemente angekoppelt ist oder die Reihe schwerer Produkte, die durch die Ankoppelelemente angekoppelt ist, auf einer Stützfläche in dem Seebehälter gestützt wird;
G Lösen der Ankopplung des schweren Produkts oder der Reihe schwerer Produkte durch die Ankoppelelemente;
H Bewegen des Fahrzeugs in einer zweiten Bewegungsrichtung entgegengesetzt zu der ersten Bewegungsrichtung in der Längsrichtung des Seebehälters, mindestens bis sich der Hubarm vollständig außerhalb des Seebehälters erstreckt.

14. Verfahren nach Anspruch 13, **gekennzeichnet durch** das Ausführen des folgenden Schritts zwischen den Schritten A und C:
B Herunterlassen der Ankoppelelemente durch die Vorrichtung für den Zweck, das schwere Produkt oder die Reihe schwerer Produkte in Reichweite der Ankoppelelemente zu bringen.

15. Verfahren zum Entladen eines Seebehälters (51), der mit einem länglichen schweren Produkt (52) oder einer Reihe schwerer Produkte beladen ist, über eine offene Vorderseite unter Verwendung einer Vorrichtung nach einem der Ansprüche 1 bis 12, die folgenden Schritte umfassend:
K Bewegen des Fahrzeugs (1) in einer ersten Bewegungsrichtung in der Längsrichtung des Seebehälters, wobei das freie Ende (15) des Hubarms (12) derart auf die Öffnung in dem Seebehälter gerichtet ist, dass der Hubarm und die Ankoppelelemente (21) durch die Öffnung in dem Seebehälter in den Seebehälter bewegt werden, mindestens bis die Ankoppelelemente direkt über dem schweren Produkt oder der Reihe schwerer Produkte positioniert sind;
L Ankoppeln des schweren Produkts oder der Reihe schwerer Produkte durch die Ankoppelelemente;
M Anheben des schweren Produkts, das durch die Ankoppelelemente angekoppelt ist, oder der Reihe schwerer Produkte, die durch die Ankoppelelemente angekoppelt ist, durch die Vorrichtung in dem Seebehälter;
N Bewegen des Fahrzeugs in einer zweiten Bewegungsrichtung entgegengesetzt zu der ersten Bewegungsrichtung in der Längsrichtung des Seebehälters, mindestens bis sich der Hubarm vollständig außerhalb des Seebehälters erstreckt;
O Lösen der Ankopplung des schweren Produkts oder der Reihe schwerer Produkte durch die Ankoppelelemente.

## Revendications

1. Dispositif pour charger un conteneur maritime (51) d'un produit lourd allongé (52) ou d'une rangée de produits lourds par l'intermédiaire d'un côté avant ouvert du conteneur maritime, comprenant un véhicule (1) qui est mobile dans une direction de mouvement (2), lequel véhicule comprend un châssis (3), au moins une partie de ce châssis a une section transversale au moins sensiblement en forme de U inversé, vue dans la direction de mouvement, qui est en partie formée par au moins deux organes formant pattes verticaux opposés (4) du châssis, le dispositif comprenant en outre une unité d'engagement (11) munie d'éléments d'engagement (21) pour s'engager avec le côté supérieur du produit ou de la rangée de produits, de moyens de déplacement (16, 17, 18) pour déplacer l'unité d'engagement vers le haut et vers le bas entre les deux organes formant pattes verticaux par rapport au châssis, où l'unité d'engagement comprend un sous-châssis qui est muni d'un bras de levage allongé (12) qui s'étend au moins de manière sensiblement horizontale et qui a une extrémité libre (15) qui est orientée dans la direction de mouvement, sur le côté inférieur de ce bras de levage, un certain nombre d'éléments d'engagement sont prévus sur au moins une partie de la longueur du bras de levage dans au moins une rangée s'étendant dans la direction longitudinale du bras de levage, où l'unité d'engagement comprend en outre un bras de base allongé (13) qui s'étend au moins de manière sensiblement horizontale et au-dessus du bras de levage, **caractérisé en ce que** le bras de base et le bras de levage sont reliés entre eux à une position longitudinale du bras de levage telle que les éléments d'engagement sont prévus entre la position longitudinale en question et l'extrémité libre du bras de levage.

2. Dispositif selon la revendication 1, **caractérisé en ce que**, lorsqu'on regarde dans une direction horizontale perpendiculaire à la direction de mouvement, le bras de base (13) et le bras de levage (12) et une partie de liaison (14) entre le bras de base et le bras de levage définissent au moins sensiblement une forme en C.

3. Dispositif selon la revendication 1 ou 2, **caractérisé en ce que** le bras de levage (12) peut pivoter par rapport au châssis (3) autour d'un axe de pivotement horizontal (31) qui s'étend perpendiculairement à la direction de mouvement (2).

4. Dispositif selon la revendication 3, **caractérisé en ce que** le bras de base (13) et le bras de levage (12) sont reliés entre eux en pivotement autour de l'axe de pivotement (31).

5. Dispositif selon la revendication 4, **caractérisé en ce que** le bras de levage (12) s'étend au-delà de l'axe de pivotement (31), lorsqu'on regarde depuis l'extrémité libre (15) du bras de levage, et l'unité d'engagement (11) comprend un actionneur (32) qui agit entre la partie du bras de levage qui s'étend au-delà de l'axe de pivotement et le bras de base pour faire pivoter le bras de levage autour de l'axe de pivotement par rapport au bras de base.

6. Dispositif selon l'une quelconque des revendications précédentes, **caractérisé en ce que** les éléments d'engagement (21) sont prévus selon un motif régulier et/ou en une seule rangée.

7. Dispositif selon l'une quelconque des revendications précédentes, **caractérisé en ce que** les deux organes formant pattes verticaux (4) sont munis d'éléments de guidage et le sous-châssis est muni d'organes de guidage (20), lesquels éléments de guidage et organes de guidage sont configurés pour une coopération de guidage pendant le mouvement vers le haut et vers le bas de l'unité d'engagement (11).

8. Dispositif selon l'une quelconque des revendications précédentes, **caractérisé en ce que** les éléments d'engagement (21) sont des éléments d'aspiration (21) configurés pour s'engager avec le produit lourd (52) ou la rangée de produits lourds en utilisant le vide.

9. Dispositif selon la revendication 8, **caractérisé en ce que** les éléments d'aspiration (21) sont suspendus à des éléments de halage allongés flexibles, qui sont à leur tour suspendus au bras de levage.

10. Dispositif selon la revendication 9, **caractérisé en ce que** chaque élément d'aspiration est suspendu aux éléments de halage sur des côtés opposés du bras de levage.

11. Dispositif selon la revendication 9 ou 10, **caractérisé en ce qu'**au moins certains des éléments de halage par lesquels un élément d'aspiration est suspendu s'étendent selon un angle les uns par rapport aux autres.

12. Dispositif selon l'une quelconque des revendications 1 à 7, **caractérisé en ce que** les éléments d'engagement comprennent des éléments formant crochets ou des éléments de serrage ou des aimants.

13. Procédé pour charger un conteneur maritime (51) d'un produit lourd allongé (52) ou d'une rangée de produits lourds par l'intermédiaire d'un côté avant ouvert du conteneur maritime, en utilisant un dispositif selon l'une quelconque des revendications précédentes, comprenant les étapes consistant :
A à positionner le produit lourd allongé (52) ou la rangée de produits lourds et les éléments d'engagement (21) les uns par rapport aux autres de manière à ce qu'au moins certains des éléments d'engagement soient situés directement au-dessus du produit lourd ou de la rangée de produits lourds ;
C à assurer l'engagement des éléments d'engagement avec le produit lourd allongé ou la rangée de produits lourds ;
D à lever, par le biais du dispositif, les éléments d'engagement, y compris le produit lourd allongé engagé par les éléments d'engagement ou la rangée de produits lourds engagés par les éléments d'engagement, de manière à ce que le bras de levage (12), les éléments d'engagement et le produit lourd allongé engagé par les éléments d'engagement ou la rangée de produits lourds engagés par les éléments d'engagement s'étendent dans la hauteur du conteneur maritime ;
E à déplacer le véhicule (1) dans une première direction de mouvement dans la direction longitudinale du conteneur maritime avec l'extrémité libre (15) du bras de levage dirigée vers l'ouverture dans le conteneur maritime, de manière à ce que le bras de levage, les éléments d'engagement, ainsi que le produit lourd allongé engagé par les éléments d'engagement ou la rangée de produits lourds engagés par les éléments d'engagement, se déplacent à travers l'ouverture dans le conteneur maritime au moins jusqu'à ce que le produit lourd allongé engagé par les éléments d'engagement ou la rangée de produits lourds engagés par les éléments d'engagement soit/soient situé(s) entièrement dans le conteneur maritime ;
F à abaisser, par le biais du dispositif, les éléments d'engagement, y compris le produit lourd allongé engagé par les éléments d'engagement ou la rangée de produits lourds engagés par les éléments d'engagement, jusqu'à ce que le produit lourd allongé engagé par les éléments d'engagement ou la rangée de produits lourds engagés par l'élément d'engagement soit/soient supporté(s) sur une surface de support dans le conteneur maritime ;
G à libérer l'engagement par les éléments d'engagement du produit lourd ou de la rangée de produits lourds ;
H à déplacer le véhicule dans une deuxième direction de mouvement opposée à la première direction de mouvement dans la direction longitudinale du conteneur maritime au moins jusqu'à ce que le bras de levage s'étende complètement à l'extérieur du conteneur maritime.

14. Procédé selon la revendication 13, **caractérisé par** le fait d'effectuer entre les étapes A et C, l'étape consistant
B à abaisser, par le biais du dispositif, les éléments d'engagement dans le but de mettre le produit lourd ou la rangée de produits lourds à la portée des éléments d'engagement.

15. Procédé pour décharger un conteneur maritime (51) chargé d'un produit lourd allongé (52) ou d'une rangée de produits lourds par l'intermédiaire d'un côté avant ouvert, en utilisant un dispositif selon l'une quelconque des revendications 1 à 12, comprenant les étapes consistant :
K à déplacer le véhicule (1) dans une première direction de mouvement dans la direction longitudinale du conteneur maritime avec l'extrémité libre (15) du bras de levage (12) dirigée vers l'ouverture dans le conteneur maritime, de sorte que le bras de levage et les éléments d'engagement (21) se déplacent dans le conteneur maritime à travers l'ouverture dans le conteneur maritime, au moins jusqu'à ce que les éléments d'engagement soient positionnés directement au-dessus du produit lourd ou de la rangée de produits lourds ;
L à assurer l'engagement des éléments d'engagement avec le produit lourd ou la rangée de produits lourds ;
M à lever, par le biais du dispositif, le produit lourd engagé par les éléments d'engagement ou la rangée de produits lourds engagés par les éléments d'engagement dans le conteneur maritime ;
N à déplacer le véhicule dans une deuxième direction de mouvement opposée à la première direction de mouvement dans la direction longitudinale du conteneur maritime au moins jusqu'à ce que le bras de levage s'étende entièrement à l'extérieur du conteneur maritime ;
O à libérer l'engagement du produit lourd ou de la rangée de produits lourds par les éléments d'engagement.
